(19) Europäisches Patentamt
European Patent Office
Office européen des brevets

(11) Publication number: 0 161 082 B1

# (12) EUROPEAN PATENT SPECIFICATION

(45) Date of publication of patent specification: 02.08.89

(51) Int. Cl.$^4$: C 10 L 1/22

(21) Application number: 85302692.0

(22) Date of filing: 17.04.85

## (54) Additives for improving low temperature characteristics of fuels, process of preparation and compositions and use thereof.

(30) Priority: 26.04.84 US 604295
26.04.84 US 604294
26.04.84 US 604189
26.04.84 US 604293

(43) Date of publication of application:
13.11.85 Bulletin 85/46

(45) Publication of the grant of the patent:
02.08.89 Bulletin 89/31

(84) Designated Contracting States:
AT BE CH DE FR GB IT LI LU NL SE

(58) References cited:
FR-A-1 240 712
US-A-3 158 647

(73) Proprietor: MOBIL OIL CORPORATION
150 East 42nd Street
New York New York 10017 (US)

(72) Inventor: Chibnik, Sheldon
7 Glen View Place
Cherry Hill New Jersey 08003 (US)

(74) Representative: Cooper, John Anthony et al
Mobil Court 3 Clements Inn
London WC2A 2EB (GB)

EP 0 161 082 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to additive compositions used to improve the filterability and reduce the pour point of diesel fuels and lubricants, to diesel fuels and lubricants containing these additive compositions, and to processes for preparing the additive compositions and diesel fuels and lubricants containing these additive compositions.

Diesel fuels and lubricants present problems at low winter temperatures because of poor flow characteristics and the clogging of fuel filters. U.S. Patent 3158647 discloses a quaternary ammonium salt wherein two of the covalent N-bonds are attached to aliphatic hydrocarbon substituents containing 7 to 30 carbon atoms selected from the group consisting of alkyl, alkenyl and alkadienyl radicals containing 8 to 22 carbon atoms and the remaining covalent N-bonds are attached to open-chain saturated aliphatic hydrocarbon radicals containing 1 to 4 carbon atoms, and wherein the ionic N-bond is attached to an anionic salt-forming radical derived from a material selected from the group consisting of (a) oil-soluble organic monocarboxylic acids selected from the group consisting of fatty acids and naphthenic acids and (b) oil-soluble mono-, di- and tri-substituted monohydric phenols whose substituents are open-chain aliphatic hydrocarbon radicals, said phenols having attached to the aromatic nucleus at least one hydrocarbon substituent containing at least 4 carbon atoms, and having not more than one substituent in the ortho position that contains more than one carbon atom. This invention seeks to provide a composition which will operate to lower the cloud point and the pour point of hydrocarbon fuels and lubricants.

In one aspect, this invention provides a composition for improving the filterability and reducing the pour point of hydrocarbon fuels and lubricants, the composition comprising the product of reacting a telomeric acid, a tertiary amine and an epoxide in the absence of added water or the product of reacting a telomeric acid and a quaternary ammonium hydroxide in the absence of added water.

The telomeric acids utilized to produce the additive of the present invention are available commercially (AKZONA, Inc., Asheville, North Carolina) and are also discussed in U.S. Patent 4283314. Telomeric acids may be obtained by the free radical addition of one mole of acetic anhydride to at least 3 moles of hexene and/or higher olefins containing up to 30 or more carbon atoms in the presence of a trivalent manganese compound. A telomer acid is ordinarily one which has a branched chain structure and wherein at least a portion, suitably 10 percent by weight, conforms to the formula:

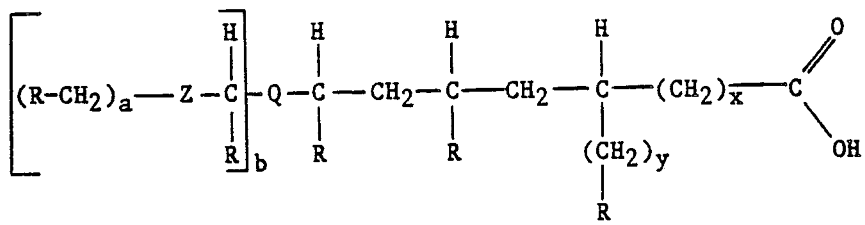

wherein.

$x = 0$ and $y = 2$ or $x = 2$ and $y = 0$;

$R = CH_3(CH_2)n$ where n represents an integer from 3 to 42;

$b = 0$ or 1.

Q represents a hydrogen atom when $b = 0$ or

Q represents a $CH_2$— group when $a = 0$ or 1;

Z represents a hydrogen atom when $a = 0$ or

Z represents a $CH_2$— group when $a = 1$.

Advantageously, the telomeric acid has a side chain of 6 to 22 carbon atoms, preferably 10 to 14 carbon atoms. A particularly preferred telomeric acid is one made from $C_{11}$—$C_{14}$ olefins and is available commercially under the tradename Kortacid T-1401 through AKZONA, Inc., Asheville, North Carolina.

The epoxide utilized to produce the additive of the present invention may have the formula:

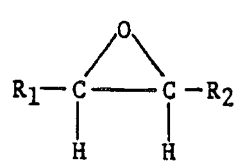

wherein.

$R_1$ and $R_2$, which may be the same or different, each represents a hydrogen atom or a $C_1$ to $C_{22}$ substituent.

Preferred epoxides are propylene oxide, ethylene oxide, decene epoxide, dodecene epoxide or hexadecene epoxide, or a mixture thereof.

The tertiary amine utilized to produce the additive of the present invention may have the formula:

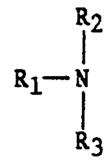

wherein.

$R_1$, $R_2$ and $R_3$, which may be the same or different each represents a $C_1$ to $C_{20}$ substituent; or comprises a substituted or unsubstituted pyridine or quinoline or a substituted piperazine.

Preferred amines include dimethyldodecylamine, dimethylcocoamine, tetramethylethylenediamine, pyridine, N,N-dimethylpiperazine, or a mixture thereof. If quaternary ammonium hydroxides are used, then the epoxide is not included as a reactant.

Preferably, the mole ratio of telomeric acid to tertiary amine to epoxide is 1:1:1.

In accordance with a further aspect of the invention, there is provided a fuel or lubricant composition comprising a hydrocarbon and a pour point or cloud point reducing amount of the composition. Preferably, the hydrocarbon contains from 0.01 to 3% by weight of the additive composition. It is preferred that the fuel or lubricant composition is one as aforesaid wherein the hydrocarbon comprises a diesel oil or a grease.

This invention also provides a process for preparing an additive composition which process comprises reacting a telomeric acid, a tertiary amine and an epoxide in the absence of added water or reacting a telomeric acid and a quaternary ammonium hydroxide in the absence of added water. Desirably the reactants are as herein defined.

Reaction temperatures may vary from 21°C (70°F) to 149°C (300°F). Reaction times average from 1 to 16 hours or longer.

The reaction is continued until the epoxide is consumed, The resulting product is a clear liquid which can be decanted to separate it from any other liquid phase or suspended solids.

This invention further provides a process for preparing hydrocarbon fuel or lubricant composition, which process comprises mixing a hydrocarbon fuel in a lubricant with the additive composition produced by the aforementioned process.

In conducting this reaction it is important that no water be added to the reaction mixture at any time. If a liquid medium for the reactants is desirable, then a non-reactant liquid medium such as heptane or diesel fuel can be used.

The resultant additive material is blended into the diesel fuel, etc. in which it is to be used to provide a concentration of between 0.01 and about 5% by weight of the mixture, preferably 0.01 and 3% by weight of the mixture.

## Examples

A number of reaction products were prepared according to the disclosure herein. These materials were prepared by reacting the reactants shown in Table 1 in equivalent molar proportions. The products were then blended in a 2.5 weight percent ratio into diesel fuel and were tested for pour point (ASTM D-97) and filterability (IP 309/76). The control run was made to show the pour point and cloud point of the diesel fuel in the absence of any added material. Run 1 is an example showing the effect of using materials made with carboxylic acids other than the telomer acids. From these data it can be seen that the pour point and the cloud point of the diesel fuel is substantially reduced using the materials of the present invention.

TABLE 1

| Run No. | Amine | Epoxide | Acid | Pour Point °C(°F) | Cloud Point °C(°F) |
|---|---|---|---|---|---|
| Control | -- | -- | -- | -23 (-10) | -19 (- 3) |
| 1 | DMC | PO | ND | -23 (-10) | -20 (- 4) |
| 2 | DMC | PO | T1402 | -43 (-45) | -29 (-20) |
| 3 | DMP(1) | PO | T1402 | | |
| 4 | Py | PO | T1402 | -43 (-45) | -29 (-20) |
| 5 | DMC | EO | T1402 | | |
| 6 | TMED(1) | PO | T1402 | | |
| 7 | DMC | $C_{16}$ | T1402 | -43 (-45) | -37 (-34) |
| 8 | DMC | $C_{12}$ | T1402 | -43 (-45) | -26 (-14) |
| 9 | DMC | $C_{10}$ | T1402 | -43 (-45) | -28 (-18) |
| 10 | DMC | $C_{16}$ | T1001 | -43 (-45) | -22 (- 8) |

(1) A diamine necessitates the use of 2 moles each of propylene oxide and acid.

DMC = Dimethylcocoamine
DMP = N,N'-Dimethylpiperazine
Py = Pyridine
TMED = Tetramethylethylenediamine
PO = Propylene oxide
EO = Ethylene oxide
ND = Neodecanoic acid
$C_{10}$, $C_{12}$, $C_{16}$ = decene, dodecene, hexadecene epoxide
T1001, T1402 = Telomer acids, $C_{10}$ or $C_{14}$ side chain

## Claims

1. A composition for improving the filterability and reducing the pour point of hydrocarbon fuels and lubricants, the composition comprising the product of reacting a telomeric acid, a tertiary amine and an epoxide in the absence of added water or the product of reacting a telomeric acid and a quaternary ammonium hydroxide in the absence of water.

2. A composition according to claim 1 wherein at least a portion of the telomeric acid has the formula:

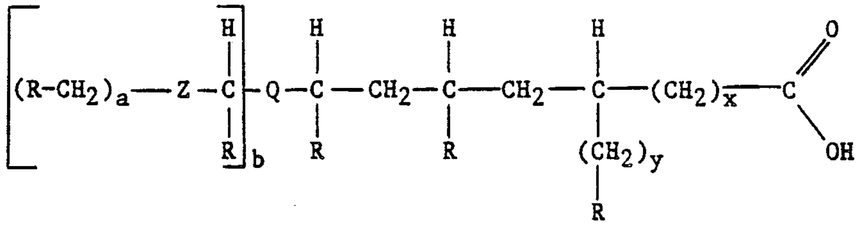

wherein:
x = 0 and y = 2 or x = 2 and y = 0;
R = $CH_3(CH_2)_n$ where n represents an integer from 3 to 42;
b = 0 or 1;
Q represents a hydrogen atom when b = 0 or
Q represents a $CH_2$— group when a = 0 or 1;
Z represents a hydrogen atom when a = 0 or

Z represents a $CH_2$— group when a = 1.

3. The composition of claim 1 or 2 wherein the telomeric acid has a side chain of 6 to 22 carbon atoms.

4. A composition according to any preceding claim wherein the tertiary amine has the formula:

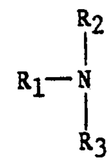

wherein:

$R_1$, $R_2$ and $R_3$, which may be the same or different, each represents a $C_1$ to $C_{20}$ substituent; or comprises a substituted or unsubstituted pyridine or quinoline or a substituted piperazine.

5. A composition according to claim 4 wherein the tertiary amine comprises dimethyldodecylamine, dimethylcocoamine, tetramethylethylenediamine, pyridine, N,N-dimethylpiperazine, or a mixture thereof.

6. A composition according to any preceding claim wherein the epoxide has the formula:

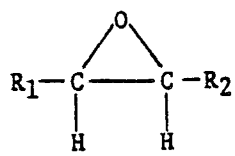

wherein.

$R_1$ and $R_2$, which may be the same or different, each represents a hydrogen atom or a $C_1$ to $C_{22}$ substituent.

7. A composition according to any preceding claim wherein the epoxide comprises propylene oxide, ethylene oxide, decene epoxide, dodecene epoxide or hexadecene epoxide, or a mixture thereof.

8. A composition according to any preceding claim wherein the mole ratio of telomeric acid to tertiary amine to epoxide is 1:1:1.

9. A fuel or lubricant composition comprising a hydrocarbon and a pour point or cloud point reducing amount of the composition according to any preceding claim.

10. A fuel or lubricant composition according to claim 9 wherein the hydrocarbon contains from 0.01 to 3% by weight of the additive composition.

11. A fuel or lubricant composition according to claim 9 or 10 wherein the hydrocarbon comprises a diesel oil or a grease.

12. A process for preparing an additive composition, which process comprises reacting a telomeric acid, a tertiary amine and an epoxide in the absence of added water or reacting a telomeric acid and a quaternary ammonium hydroxide in the absence of added water.

13. A process according to claim 12 wherein the reactants are defined in any of claims 2 to 8.

14. A process according to claim 12 or 13 wherein the reaction is conducted at a temperature from 21°C (70°F) to 149°C (300°F).

15. A process for preparing a hydrocarbon fuel or lubricant composition, which process comprises mixing a hydrocarbon fuel or a lubricant with the additive composition produced by the process of any of claims 12 to 14.

16. A process according to claim 15 wherein the components are defined in claim 10 or 11.

**Patentansprüche**

1. Zusammensetzung zur Verbesserung der Filtrierbarkeit und zur Reduzierung des Pourpoints von Kohlenwasserstoffbrennstoffen und Schmiermitteln, wobei diese Zusammensetzung das Reaktionsprodukt einer Telomersäure, eines tertiären Amins und eines Epoxids ohne Wasserzusatz oder das Reaktionsprodukt einer Telomersäure und eines quaternären Ammoniumhydroxids ohne Wasser umfaßt.

2. Zusammensetzung nach Anspruch 1, worin mindestens ein Teil der Telomersäure die Formel aufweist:

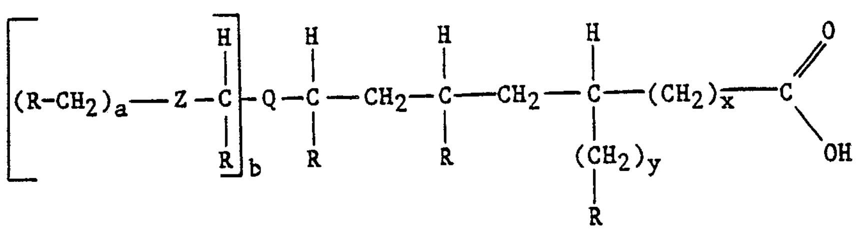

worin:

$x = 0$ und $y$ 2 oder $x$ 2 und $y = 0$;

$R = CH_3(CH_2)_n$, worin n eine ganze Zahl von 3 bis 42 darstellt;

$b = 0$ oder 1

Q ein Wasserstoffatom darstellt, wenn $b = 0$ ist oder

Q eine $CH_2$-Gruppe darstellt, wenn $a = 0$ oder 1 ist;

Z ein Wasserstoffatom darstellt, wenn $a = 0$ ist oder

Z eine $CH_2$-Gruppe darstellt, wenn $a = 1$ ist.

3. Zusammensetzung nach Anspruch 1 oder 2, worin die Telomersäure eine Seitenkette von 6 bis 22 Kohlenstoffatomen aufweist.

4. Zusammensetzung nach einem der vorstehenden Ansprüche worin das tertiäre Amin die Formel aufweist

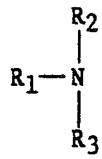

worin:

$R_1$, $R_2$ und $R_3$, die gleich oder verschieden sein können, jeweils einen $C_1$ bis $C_{20}$-Substituenten darstellen, oder unsubstituiertes Pyridin oder Chinolin oder ein substituiertes Piperazin darstellen.

5. Zusammensetzung nach Anspruch 4, worin das tertiäre Amin Dimethyldodecylamin, Dimethylcocoamin, Tetramethylethylendiamin, pyridin, N,N-Dimethylpiperazin oder eine Mischung davon darstellt.

6. Zusammensetzung nach einem der vorstehenden Ansprüche, worin das Epoxid die Formel aufweist.

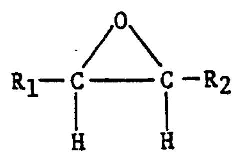

worin:

$R_1$ und $R_2$, die gleich oder verschieden sein können, jeweils ein Wasserstoffatom oder einen $C_1$bis $C_{22}$-Substituenten darstellen.

7. Zusammensetzung nach einem der vorstehenden Ansprüche, worin das Epoxid Propylenoxid, Ethylenoxid, Dezenepoxid, Dodezenepoxid oder Hexadezenepoxid oder eine Mischung davon darstellt.

8. Zusammensetzung nach einem der vorstehenden Ansprüche, worin das Molverhältnis der Telomersäure zum tertiären Amin zum Epoxid 1:1:1 beträgt.

9. Brennstoff- oder Schmiermittelzusammensetzung, die einen Kohlenwasserstoff und einen den Pourpoint oder den Trübungspunkt reduzierenden Anteil dieser Zusammensetzung nach einem der vorstehenden Ansprüche umfaßt.

10. Brennstoff- oder Schmiermittelzusammensetzung nach Anspruch 9, worin der Kchlenwasserstoff von 0,01 bis 3 Gew.-% der Zusatzstoffzusammensetzung enthält.

11. Brennstoff- oder Schmiermittelzusammensetzung nach Anspruch 9 oder 10, worin der Kohlenwasserstoff Dieselöl oder Schmierfett umfaßt.

12. Verfahren zur Herstellung einer Zusatzstoffzusammensetzung, wobei dieses Verfahren die Reation einer Telomersäure, eines tertiären Amins und eines Epoxids ohne Wasserzusatz, oder die Reaktion einer Telomeräure und eines quaternären Ammoniumhydroxids ohne Wasserzusatz umfaßt.

13. Verfahren nach Anspruch 12, worin die Reaktanten in einem der Ansprüche 2 bis 8 definiert sind.

14. Verfahren nach Anspruch 12 oder 13, worin die Reaktion bei einer Temperatur von 21 °C (70 °F) bis 149 °C (300 °F) durchgeführt wird.

15. Verfahren zur Herstellung einer Kohlenwasserstoffbrennstoff- oder Schmiermittelzusammensetzung, wobei dieses Verfahren das Mischen des Kohlenwasserstoffbrennstoffes oder des Schmiermittels mit der Zusatzstoffzusammensetzung umfaßt, die nach dem Verfahren nach einem der Ansprüche 12 bis 14 hergestellt wurde.

16. Verfahren nach Anspruch 15, worin die Komponenten in Anspruch 10 oder 11 definiert sind.

**Revendications**

1. Une composition pour améliorer la filtrabilité et la réduction du point de figeage des combustibles et des lubrifiants hydrocarbonés, ladite composition comprenant le produit de la réaction d'un acide télomère, d'une amine tertiaire et d'un époxyde en l'absence d'eau ajoutée ou le produit de la réaction d'un acide télomère et d'un hydroxyde d'ammonium quaternaire en l'absence d'eau.

2. Une composition selon la revendication 1, selon laquelle au moins une portion de l'acide télomère a la formule suivante.

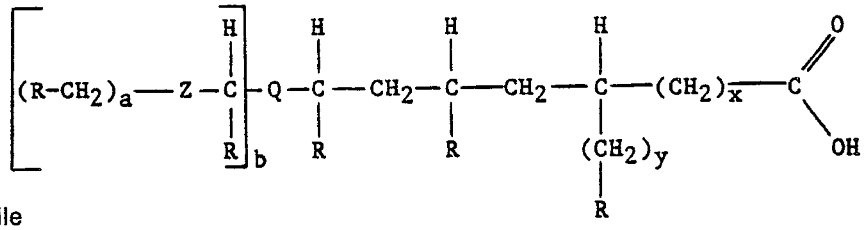

dans laquelle

$x = 0$ et $y = 2$ ou $x = 2$ et $y = 0$;

$R = CH_3(CH_2)_n$ où n représente un nombre entier de 3 à 42;

$b = 0$ ou 1;

Q représente un atome d'hydrogène lorsque $b = 0$ ou

Q représente un groupe $CH_2$— lorsque $a = 0$ ou 1;

Z représente un atome d'hydrogène lorsque $a = 0$ ou

Z représente un groupe $CH_2$— lorsque $a = 1$.

3. La composition selon la revendication 1 ou 2, selon laquelle l'acide télomère a une chaîne latérale de 6 à 22 atomes de carbone.

4. Une composition selon l'une quelconque des revendications précédentes, selon laquelle l'amine tertiaire a la formule:

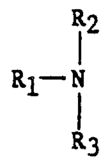

dans laquelle

$R_1$, $R_2$ et $R_3$, qui peuvent être identiques ou différents, représentent chacun un substituant en $C_1$ à $C_{20}$; ou bien comprend une pyridine ou une quinoléine substituée ou non substituée ou une pipérazine substituée.

5. Une composition selon la revendication 4, selon laquelle l'amine tertiaire comprend la diméthyldodécylamine, la diméthylcocoamine, la tétraméthyléthylènediamine, la pyridine, la N,N-diméthylpipérazine ou un mélange de celles-ci.

6. Une composition selon l'une quelconque des revendications précédentes, selon laquelle l'époxyde a la formule:

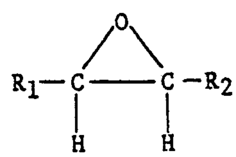

dans laquelle

$R_1$ et $R_2$, qui peuvent être identiques ou différents représentent chacun un atome d'hydrogène ou un substituant en $C_1$ à $C_{22}$.

7. Une composition selon l'une quelconque des revendications précédentes, selon laquelle l'époxyde comprend l'oxyde de propylène, l'oxyde d'éthylène, l'époxyde de décène, l'époxyde de dodécène, ou l'époxyde d'hexadécène ou un mélange de ceux-ci.

8. Une composition selon l'une quelconque des revendications précédentes, selon laquelle le rapport molaire acide télomère:amine tertiaire:époxyde est de 1:1:1.

9. Une composition de combustible ou de lubrifiant comprenant un hydrocarbure et une quantité efficace d'une composition selon l'une quelconque des revendications précédentes pour réduire le point de figeage ou le point de trouble.

10. Une composition de combustible ou de lubrifiant selon la revendication 9, selon laquelle l'hydrocarbure contient de 0,01 à 3 % en poids de la composition d'additif.

11. Une composition de combustible ou de lubrifiant selon la revendication 9 ou 10, selon laquelle l'hydrocarbure comprend une huile ou une graisse pour moteur diesel.

12. Un procédé pour la préparation d'une composition d'additifs, ledit procédé comprenant la réaction d'un acide télomère, d'une amine tertiaire et d'un époxyde en l'absence d'eau ajoutée ou la réaction d'un acide télomère et d'un hydroxyde d'ammonium quaternaire en l'absence d'eau ajoutée.

13. Un procédé selon la revendication 12, selon lequel les réactifs sont définis comme dans l'une quelconque des revendications 2 à 8.

14. Un procédé selon la revendication 12 ou 13, selon lequel la réaction est conduite à une température de 21°C à 149°C.

15. Un procédé de préparation d'une composition de combustible ou de lubrifiant hydrocarboné, ledit procédé comprenant le mélange d'un combustible ou d'un lubrifiant hydrocarboné avec la composition d'additifs produite par le procédé selon l'une quelconque des revendications 12 à 14.

16. Un procédé selon la revendication 15, selon lequel les composants sont définis comme dans la revendication 10 ou 11.